# EUROPÄISCHE PATENTSCHRIFT

(11) **EP 3 336 416 B1**
(45) Veröffentlichungstag und Bekanntmachung des Hinweises auf die Patenterteilung: **04.11.2020**
(21) Anmeldenummer: 17203657.6
(22) Anmeldetag: 24.11.2017
(51) Int. Cl.: F21S 41/20, B60Q 1/26, B60R 1/12, B60Q 9/00

(54) **BELEUCHTUNGSEINHEIT**
ILLUMINATION UNIT
UNITÉ D'ÉCLAIRAGE

(30) Priorität: 15.12.2016 DE 102016225153
(43) Veröffentlichungstag der Anmeldung: 20.06.2018
(73) Patentinhaber: Magna Mirrors Holding GmbH, 63877 Sailauf (DE)
(72) Erfinder: HORVATH, Thomas, 64289 Darmstadt (DE)
(74) Vertreter: Völger, Silke Beatrix

(56) Entgegenhaltungen:
- EP-A1- 0 584 547
- EP-A1- 2 481 978
- WO-A1-2011/050982
- JP-A- 2005 320 004
- US-A- 5 788 357
- US-A1- 2004 080 958
- US-A1- 2016 078 768

## Beschreibung

Die Erfindung betrifft eine Beleuchtungseinheit für die Anwendung im automotiven Bereich. Die erfindungsgemäße Beleuchtungseinheit fügt sich harmonisch in die Kontur des Fahrzeugs ein.

### Stand der Technik

Aus dem Stand der Technik sind eine Vielzahl von Beleuchtungskörper im Fahrzeug bekannt. Sowohl im Innenraumbereich als auch an der Außenkontur des Fahrzeugs werden unterschiedliche Beleuchtungseinheiten angebracht, die unterschiedlichen Funktionen erfüllen.

Im Innenraumbereich handelt es sich um Beleuchtungen für Instrumente oder bestimmte Fahrzeugbereiche, um Ausleuchtungen zur Kennzeichnung von Bedienelementen oder für Beleuchtungen zum Lesen oder zur Ambientebeleuchtung bereitzustellen. Um eine angenehme Umgebung zu schaffen, werden Bereiche wie der Fußraum, die Armablage an den Fahrzeugtüren, Bedienelement, Innenspiegel oder Dachmodule mindestens beim Ein- und Austeigen beleuchtet.

Im Außenbereich des Fahrzeugs dient Beleuchtung zur Kennzeichnung als Positionslicht, als Front-oder Heckbeleuchtung oder als blinkende Anzeige für Spurwechsel oder als Gefahranzeige für den Fahrer.

Sowohl innen als auch außen müssen die Beleuchtungen bestimmten Anforderungen genügen. Hier ist zunächst die Zulassungsfähigkeit zu beachten, die beispielsweise Leuchtdichte und Blinkwiederholraten von Blinkern festlegt. Auch die auszuleuchtenden Raumbereiche in der Umgebung des Fahrzeugs sind durch Regulierungen bestimmt. Neben den Zulassungsauflagen bestimmt die Funktion und das Design das Aussehen der Beleuchtung.

Ein wichtiger Parameter im Stand der Technik ist dabei, dass die Beleuchtung verborgen angebracht wird. Das bedeutet, dass die Abdeckscheibe, die die Beleuchtungseinheit nach außen hin abschließt, im Farbton an die Umgebung angepasst wird oder dunkel eingefärbt ist, um nicht aufzufallen.

Zudem soll die Abdeckscheibe eine freie Sicht auf die technischen Bauteile im Innern der Beleuchtungseinheit verhindern.
Je nach Einsatzort und Einsatzzweck soll das Licht einer oder mehreren Lichtquellen die Abdeckscheibe harmonisch ausleuchten und einen diffusen Lichteindruck hinterlassen. Alternativ dazu wird auch eine definierte Ausleuchtung der Umgebung des Fahrzeuges oder ein auf ein Bauteil des Interieur gerichteter Lichtstrahl gewünscht.

Im Stand der Technik wird in der US 7 293 901 B2 ein Beleuchtungselement beschrieben, das kollimierende optische Elemente sowie prismatische Strukturen zur Strahlablenkung aufweist. Dieser kollimierende optische Block wird in die Leuchte eingebaut. Die vorgesehene Lichtquelle ist etwa 0,5 mm von der kollimierenden Einheit entfernt, daher lässt sich auch die Einkerbtiefe der Prismen auf etwa 0,15 mm bestimmen.

Aus der EP 2500629A1 ist eine Beleuchtungseinheit bekannt, die ein geschlossenes Gehäuse aufweist. Das Licht der Leuchtmittel wird durch die Abdeckscheibe der Beleuchtungseinheit ausgestrahlt. Auf der Innenseite der Abdeckscheibe ist ein optischer Film aufgebracht. Der optische Film weist entweder prismatische Mikrostrukturen auf oder zeigt eine Mikrolinsen-Struktur.

Die EP 0 584 547 A1 offenbart eine Beleuchtungseinheit mit einem Gehäuse, umfassend eine Lichtquelle die ihr Licht durch ein als Reflektor ausgeführtes Lichtdiffusionsbauteil und eine Lichtumlenkfolie abstrahlt, wobei die Lichtumlenkfolie an die Kontur eines Fahrzeugbauteils angepasst ist und wobei die mindestens eine Lichtumlenkfolie eine Mikrostruktur auf der Lichtquelle abgewandten Außenseite aufweist, die das Licht in eine vom Einfallswinkel abweichende Richtung ablenkt. Das Gehäuse der Beleuchtungseinheit ist über eine transparente Scheibe verschlossen.

Aus der US 2016 / 0 078 768 A1 ist eine Beleuchtungseinheit bekannt, die als Warnanzeige im Fahrzeugaußenspiegel eingesetzt wird. Die Beleuchtungseinheit umfasst ein Gehäuse und ist hinter dem Spiegelglas angeordnet. Das Gehäuse wird über die Spiegelglasscheibe verschlossen. In dem Gehäuse der Beleuchtungseinheit ist eine Lichtquelle angeordnet, die ihr Licht durch ein Lichtdiffusionsbauteil und eine Lichtumlenkfolie abstrahlt.

Es ist daher Ziel der vorliegenden Anmeldung eine Beleuchtungseinheit zu schaffen, die das Licht in gewünschter Form emittiert, wobei keine aufwendigen und kostenintensiven Vorkehrungen zu treffen sind.

Die Lösung der Aufgabe erfolgt mit einer Beleuchtungseinheit mit einem Gehäuse, umfassend mindestens eine Lichtquelle mit einer Hauptlichtausbreitung, die ihr Licht durch ein Lichtdiffusionsbauteil und eine Lichtumlenkfolie abstrahlt, wobei die Lichtumlenkfolie an die Kontur eines Fahrzeugbauteils angepasst ist, wobei die mindestens eine Lichtumlenkfolie eine Mikrostruktur auf der der Lichtquelle abgewandten Außenseite aufweist, die das Licht in eine vom Einfallswinkel abweichende Richtung ablenkt, und wobei das Lichtdiffusionsbauteil als Lichtdiffusionsfolie mit einer in Richtung der Hauptlichtausbreitung liegenden Lichtdiffusionsschicht ausgeführt ist, wobei die Lichtumlenkfolie das Gehäuse verschließt.

Durch das Weglassen einer Abdeckscheibe ist der Aufbau der Beleuchtungseinheit vereinfacht. Zudem wird die Mikrostruktur außen aufgebracht und so der Lichtweg nach der Ablenkung direkter auf den Fahrer abgelenkt.

Es ist von Vorteil, dass die Lichtumlenkfolie eine prismatische Mikrostruktur aufweist, die eine einfache Ablenkung des Lichts ermöglicht.

Vorteilhafterweise ist die Lichtumlenkfolie Teil der Fahrzeugkontur.

Es ist von Vorteil, wenn das Lichtdiffusionsbauteil eine Lichtdiffusionsfolie ist, die ein Lichtdiffusionselement verschließt, das Öffnungen für die Leuchtmittel besitzt und innerhalb des Gehäuses angeordnet ist.

Weiterhin ist es vorteilhaft, dass die Lichtdiffusionsfolie einseitig oder beidseitig mit einer Lichtdiffusionsschicht versehen ist oder das Material der Lichtdiffusionsfolie selbst lichtstreuende Eigenschaften besitzt.

Eine weitere vorteilhafte Ausgestaltung wird erreicht, wenn das Lichtdiffusionsbauteil eine in der Lichtumlenkfolie auf der Innenseite angebrachte Lichtdiffusionsschicht ist.

Eine weitere Ausgestaltung weist zwei oder mehrere Lichtumlenkfolien auf, die miteinander über weitere doppelt klebenden Schäume gekoppelt sind.

Es ist von Vorteil, dass die Lichtumlenkfolie das Gehäuse mit einem am Rand des Gehäuses aufgebrachten doppelseitig klebenden Schaum verschließt.

Die Beleuchtungseinheit ist als Warnanzeige im Außenspiegel verbaut.

### Beschreibung der Erfindung

Es zeigen:
- Fig. 1: einen Außenspiegel mit Warnanzeige
- Fig. 2: eine erfindungsgemäße Beleuchtungseinheit
- Fig. 3: Details der Ausführungsform nach Figur 2
- Fig. 4: eine nicht beanspruchte Ausführungsform,
- Fig. 5: ein Detail der Ausführung nach Figur 4.
- Fig. 6: eine nicht beanspruchte Ausführungsform mit mehrere Folien.

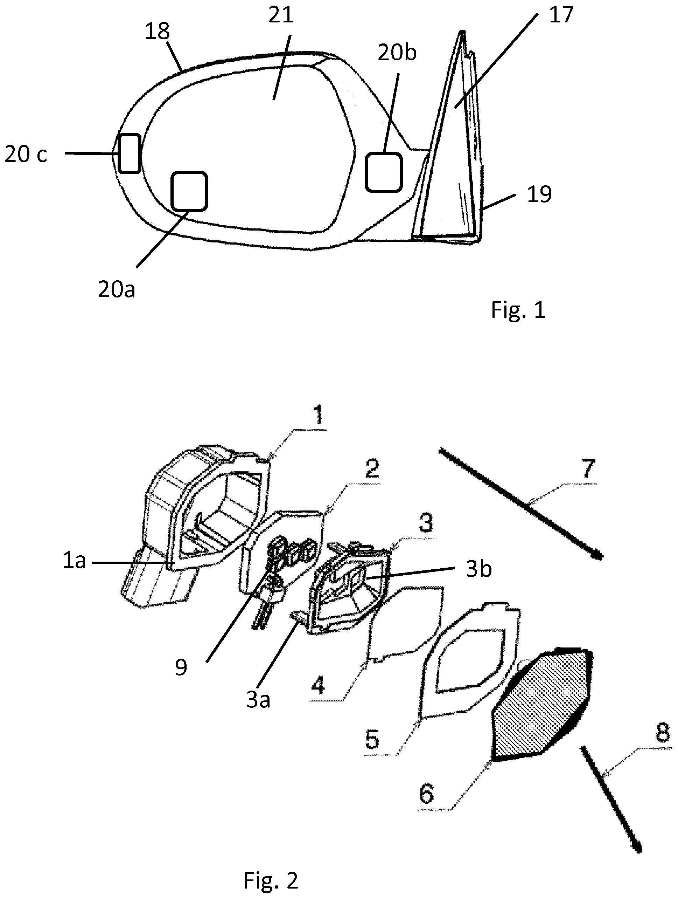

Fig. 1 zeigt eine Außenspiegelanordnung mit einem Spiegelfuß 17 und einem Spiegelkopf 18. Der Spiegelkopf 18 ist im Allgemeinen gegen den Spiegelfuß 17 drehbar angeordnet. Der Spiegelfuß wird am Fahrzeug 19 befestigt. In der Figur 1 werden mehrere mögliche Einbauorte für Beleuchtungseinheiten skizziert. Die Positionen sind mit der Referenz 20 gekennzeichnet.

Die erfindungsgemäßen Beleuchtungseinheiten leuchten je nach Funktion als harmonisch beleuchtete Lichtbereiche auf. Eine Warnanzeige eines Fahrerassistenzsystems ist an der Position 20 a oder an einer anderen dem Fahrer zugänglichen Position des Außenspiegels angebracht. Die Anzeige leuchtet bei Gefahr auf. Die Warnanzeige wird dabei vollständig und nahezu gleichmäßig bei guter Sichtbarkeit für den Fahrer ausgeleuchtet.
Soll das Licht der Beleuchtungseinheit gerichtet ausgestrahlt werden, müssen Maßnahmen vorgenommen werden, die zu einer Ablenkung der ausgesendeten Lichtstrahlen führen.

An der Einbauposition 20b der Beleuchtungseinheit ist die Ausleuchtung eines Bereichs neben dem Fahrzeug und die Funktion als Umfeldleuchte möglich. Das Licht der Umfeldleuchte wird schräg nach unten emittiert. Auch eine Beleuchtung der Tür und des Einstiegbereichs ist denkbar. Die Einbauposition 20a liegt hinter einem Spiegelglas 21, wobei mindestens ein Bereich des Spiegelglases für das Licht der Beleuchtungseinheit transparent ausgestaltet ist.

Fig. 2 zeigt eine Beleuchtungseinheit wie sie für die Gefahranzeige eines Fahrerassistenten in einen Außenspiegel eingebaut wird. Ein solches Modul wird beispielsweise in die Seitenwand eines Spiegelgehäuses verbaut, die vom Fahrer aus sichtbar ist oder hinter dem Spiegelglas angeordnet. Das Beleuchtungsmodul leuchtet beispielsweise auf ein Steuersignal eines Fahrerassistenzsystems auf, wenn sich ein Fahrzeug im Totwinkelbereich nähert. Das Beleuchtungsmodul selbst besteht aus einem Gehäuse 1, das so ausgestaltet ist, dass die weiteren Bauteile darin Platz finden. Die Beleuchtungseinheit muss dabei nicht unbedingt wasserdicht verschlossen sein, es kann von Vorteil sein das Modul nicht zu dichten und Luftkonvektion nach außen zuzulassen. Innerhalb des Gehäuses 1 ist eine Leiterplatte 2 mit Leuchtmitteln 9 auf der Gehäuserückwand des Gehäuses 1 installiert. Ein Lichtdiffusionselement 3 aus weißem Kunststoff fungiert als Niederhalter für die Leiterplatte 2 und fixiert die Leiterplatte über geeignete Stege 3a im Gehäuses 1. Das Lichtdiffusionselement 3 weist Öffnungen 3b auf, durch die die Leuchtmittel 9, die LEDs leuchten oder auch durchgesteckt sind, so dass die LED Körper von den Öffnungen 3b umfasst und geführt sind.
Eine Lichtdiffusionsfolie 4 mit einer in Richtung der Hauptlichtausbreitung 7 außen liegenden Lichtdiffusionsschicht schließt das Lichtdiffusionselement 3 ab.

Diese Lichtdiffusionsfolie kann einseitig oder beidseitig mit einer Lichtdiffusionsschicht versehen sein oder das Material der Lichtdiffusionsfolie selbst besitzt lichtstreuende Eigenschaften.

Auf dem Rand 1a des Gehäuses 1 wird eine Dichtung in Form eines doppelseitig klebenden Schaumrings aufgebracht. Der Abschluss bildet eine Lichtumlenkfolie 6.

Die Lichtumlenkfolie 6 weist eine in Richtung 7 weisenden, außenliegende Struktur 10 auf, die das diffuse Licht in eine auf den Fahrer gerichtete Richtung lenkt. Die Lichtumlenkfolie wird mit dem doppelseitig klebenden Schaum entlang der Außenkontur der Beleuchtungseinheit verklebt und das Gehäuse mit der Folie verschlossen. Die Lichtumlenkfolie bildet also den Deckel des Gehäuses, eine weitere Komponente zum Verschließen ist nicht notwendig. Die Lichtumlenkfolie 6 passt sich in ihrer Form an die Kontur des Bauteils an, in das die Leuchte eingebracht ist. Als Material für die Lichtumlenkfolie kommt PC oder ein anderer optisch klarer Kunststoff wie PMMA zum Einsatz.

Der elektrische Anschluss wird über einen Stecker 13 hergestellt.

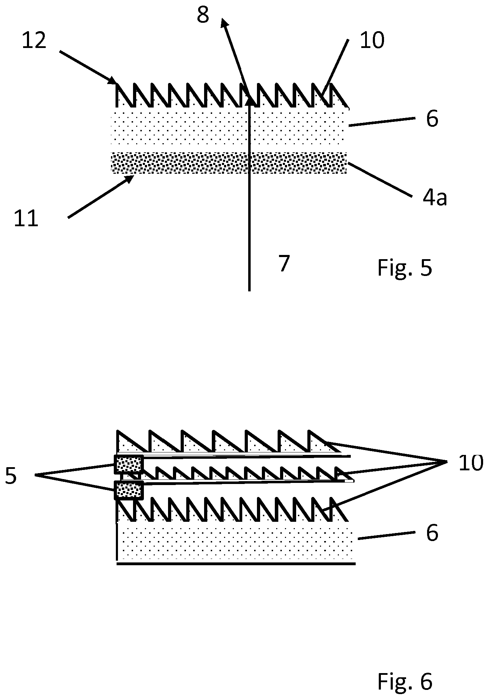

Prismatische optische Filme sind beispielsweise aus der US 7763331 bekannt. Sie dienen in der Displaytechnologie zur harmonischen Verteilung des Lichtes der Hintergrundbeleuchtung. Der beispielhaft genannte prismatische Film besteht aus Kunststoffmaterial, wobei das Trägermaterial mit dem aufgebrachten Material für die Struktur identisch oder unterschiedlich sein kann. Wichtig ist es, einen UV resistenten Kunststoff zu wählen, der im Außeneinsatz des Fahrzeugs nicht zu stark altert. Der Einsatz dieses Kunststoffes ermöglicht es somit, die Mikrostruktur 10 nach außen zu verlegen und einen bis zur Mikrostruktur 10 ungestörten Lichtweg herzustellen. Die abgelenkten Lichtstrahlen in Richtung 8 können, müssen aber nicht notwendigerweise weitere optisch relevante Schichten mehr durchlaufen. Um eine noch stärkere Ablenkung des Lichtes in eine bestimmte Hauptvorzugsrichtung zu erreichen, können zwei oder mehrere Lichtumlenkfolien miteinander über einen weiteren doppelt klebenden Schaumring miteinander gekoppelt werden, wie es in Figur 6 grob dargestellt ist. Dabei werden mehrere Schichten von Lichtablenkfolien aufeinandergeschichtet und entlang des Randes verklebt. Das Trägermaterial für die Mikrostruktur ist in der schematischen Zeichnung nur angedeutet.

Durch die geringe Dicke der Lichtumlenkfolie stört er die optischen Eigenschaften der Beleuchtungseinheit nur sehr wenig. Die Struktur des Films ist vom Auge nicht mehr auflösbar.

Das Licht der LEDs wird diffus gestreut und trifft auf die flache, unstrukturierte Innenseite 11 der Lichtumlenkfolie 6. Das Licht tritt durch die Lichtumlenkfolie und erreicht die Struktur der Außenseite 12 und wird in Abhängigkeit vom Winkel des Lichteinfalls in eine Richtung 8 gebrochen. Die Struktur besteht dabei vorzugsweise aus prismatischen Formen, die mit unterschiedlichen Prismenformen und Prismenwinkel zwischen 70 bis 120° hergestellt werden.

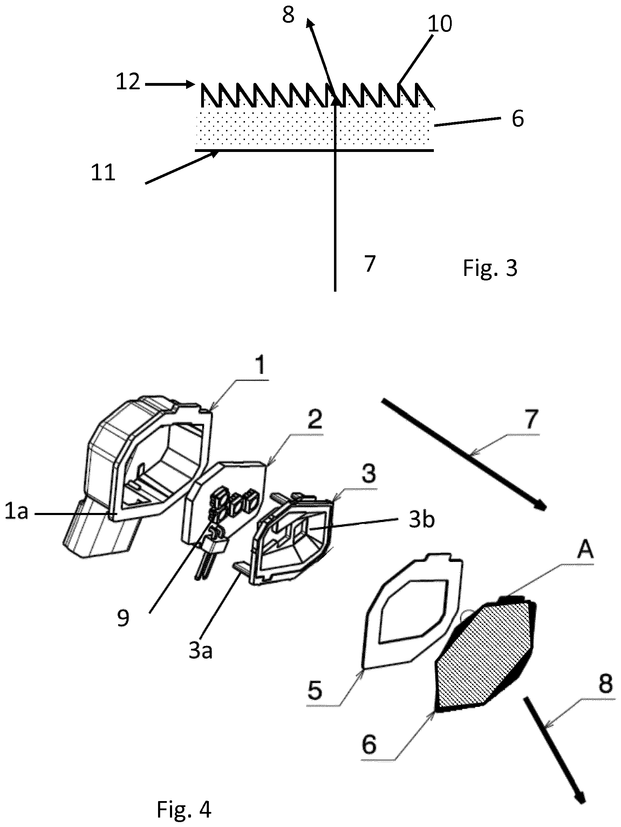

In Figur 4 wird eine nicht beanspruchte Ausführungsform erläutert. In dieser Ausführungsform wird das Lichtdiffusionselement nicht mehr von einer Lichtdiffusionsfolie verschlossen. Die Funktion der Lichtdiffusion wird vielmehr, wie in Figur 5 gezeigt, von einer Lichtdiffusionsschicht 4a, die in die Lichtablenkfolie 6 integriert ist, erfüllt. Somit werden alle Funktionen nämlich das diffuse Streuen des Lichts und das Ablenken des Lichts von einem Bauteil übernommen, das zudem noch das Gehäuse der Beleuchtungseinheit als Deckel fest verschließt.

### Bezugszeichenliste

1 : Gehäuse
   1a Rand
2 : Leiterplatte
3 : Lichtdiffusionselement
3a Stege
3b Öffnungen
4: Lichtdiffusionsfolie
4a Lichtdiffusionsschicht
5 : Schaum
6 : Lichtumlenkfolie
7 : Lichtausbreitung
8 : Lichtausbreitung nach Lichtumlenkung
9 : Leuchtmittel
10 : Optische Mikrostruktur
11 : Innenseite
12 : Außenseite
13 : Stecker
17 : Spiegelfuß
18 : Spiegelkopf
19 : Fahrzeug
20a,b,c : Einbaupositionen

## Patentansprüche

1. Beleuchtungseinheit mit einem Gehäuse (1), umfassend mindestens eine Lichtquelle (9) mit einer Hauptlichtausbreitung (7), die ihr Licht durch ein Lichtdiffusionsbauteil und eine Lichtumlenkfolie (6) abstrahlt, wobei die Lichtumlenkfolie (6) an die Kontur eines Fahrzeugbauteils angepasst ist und wobei die mindestens eine Lichtumlenkfolie (6) eine Mikrostruktur (10) auf der der Lichtquelle abgewandten Außenseite (12) aufweist, die das Licht in eine vom Einfallswinkel abweichende Richtung ablenkt, **dadurch gekennzeichnet, dass** das Lichtdiffusionsbauteil als Lichtdiffusionsfolie (4, 4a) mit einer in Richtung der Hauptlichtausbreitung (7) außen liegenden Lichtdiffusionsschicht ausgeführt ist, und dass die Lichtumlenkfolie (6) das Gehäuse (1) verschließt.

2. Beleuchtungseinheit (1) nach Anspruch 1, **dadurch gekennzeichnet, dass** die Lichtumlenkfolie (6) eine prismatische Mikrostruktur aufweist

3. Beleuchtungseinheit (1) nach Anspruch 1, **dadurch gekennzeichnet, dass** die Lichtumlenkfolie (6) Teil der Fahrzeugkontur ist.

4. Beleuchtungseinheit (1) nach Anspruch 1 bis 3, **dadurch gekennzeichnet, dass** die Lichtdiffusionsfolie (4) ein Lichtdiffusionselement (3) verschließt, das Öffnungen (3b) für die Leuchtmittel besitzt und innerhalb des Gehäuses angeordnet ist.

5. Beleuchtungseinheit (1) nach Anspruch 4, **dadurch gekennzeichnet, dass** die Lichtdiffusionsfolie einseitig oder beidseitig mit einer Lichtdiffusionsschicht versehen ist oder das Material der Lichtdiffusionsfolie selbst lichtstreuende Eigenschaften besitzt.

6. Beleuchtungseinheit (1) nach Anspruch 1 bis 5, **dadurch gekennzeichnet, dass** die Lichtumlenkfolie (6) das Gehäuse mit einem am Rand (1a) des Gehäuses (1) aufgebrachten doppelseitig klebenden Schaum (5) verschließt.

7. Beleuchtungseinheit (1) nach Anspruch 6, **dadurch gekennzeichnet, dass** zwei oder mehrere Lichtumlenkfolien (6) miteinander über weitere doppelt klebenden Schäume miteinander gekoppelt sind.

8. Beleuchtungseinheit (1) nach Anspruch 1 bis 7, **dadurch gekennzeichnet, dass** die Beleuchtungseinheit als Warnanzeige in einem Außenspiegel verbaut ist.

9. Beleuchtungseinheit (1) nach Anspruch 8, **dadurch gekennzeichnet, dass** die die Warnanzeige an der inneren, einer dem Fahrer zugewandten Wandung eines Außenspiegelgehäuses angebracht ist.

10. Beleuchtungseinheit (1) nach Anspruch 1 bis 7, **dadurch gekennzeichnet, dass** die Beleuchtungseinheit als Umfeldleuchte an einem Fahrzeug verbaut ist.

## Claims

1. Illumination unit having a housing (1), comprising at least one light source (9) with a main light propagation (7), which light source emits its light through a light diffusion component and a light-deflecting film (6), wherein the light-deflecting film (6) is adapted to the contour of a vehicle component and wherein the at least one light-deflecting film (6) has a microstructure (10) on the outside (12) that is remote from the light source, which microstructure deflects the light in a direction that differs from the angle of incidence, **characterized in that** the light diffusion component is designed as a light diffusion film (4, 4a) with a light diffusion layer located outside in the direction of the main light propagation (7) and **in that** the light-deflecting film (6) closes the housing (1).

2. Illumination unit (1) according to Claim 1, **characterized in that** the light-deflecting film (6) has a prismatic microstructure.

3. Illumination unit (1) according to Claim 1, **characterized in that** the light-deflecting film (6) is part of the vehicle contour.

4. Illumination unit (1) according to Claim 1 to 3, **characterized in that** the light diffusion film (4) closes a light diffusion element (3), which has openings (3b) for the light-emitting means and is arranged within the housing.

5. Illumination unit (1) according to Claim 4, **characterized in that** the light diffusion film is provided with a light diffusion layer on one or both sides, or the material of the light diffusion film itself has light-scattering properties.

6. Illumination unit (1) according to Claim 1 to 5, **characterized in that** the light-deflecting film (6) closes the housing by way of a foam (5) that is adhesive on two sides and has been applied on the periphery (1a) of the housing (1).

7. Illumination unit (1) according to Claim 6, **characterized in that** two or more light-deflecting films (6) are coupled together by way of further foams that are adhesive on two sides.

8. Illumination unit (1) according to Claim 1 to 7, **characterized in that** the illumination unit is installed as a warning indicator in an exterior mirror.

9. Illumination unit (1) according to Claim 8, **characterized in that** the warning indicator is arranged on the inner wall, facing the driver, of an exterior mirror housing.

10. Illumination unit (1) according to Claim 1 to 7, **characterized in that** the illumination unit is installed as puddle lamp on a vehicle.

## Revendications

1. Unité d'éclairage doté d'un boîtier (1), comprenant au moins une source de lumière (9) ayant une propagation de lumière principale (7) qui projette sa lumière à travers un composant de diffusion de lumière et une feuille de déviation de lumière (6), la feuille de déviation de lumière (6) étant adaptée au contour d'un composant de véhicule, et dans laquelle ladite au moins une feuille de déviation de lumière (6) présente une microstructure (10) sur la face extérieure (12), détournée de la source de lumière, qui dévie la lumière dans une direction différente de l'angle d'incidence, **caractérisée en ce que** le composant de diffusion de lumière est réalisé sous la forme d'une feuille de diffusion de lumière (4, 4a) avec une couche de diffusion de lumière située à l'extérieur dans la direction de la propagation de lumière principale (7), et **en ce que** la feuille de déviation de lumière (6) ferme le boîtier (1).

2. Unité d'éclairage (1) selon la revendication 1, **caractérisée en ce que** la feuille de déviation de lumière (6) présente une microstructure prismatique.

3. Unité d'éclairage (1) selon la revendication 1, **caractérisée en ce que** la feuille de déviation de lumière (6) fait partie du contour de véhicule.

4. Unité d'éclairage (1) selon les revendications 1 à 3, **caractérisée en ce que** la feuille de diffusion de lumière (4) ferme un élément de diffusion de lumière (3) qui dispose d'ouvertures (3b) pour les moyens d'éclairage et est disposé à l'intérieur du boîtier.

5. Unité d'éclairage (1) selon la revendication 4, **caractérisée en ce que** la feuille de diffusion de lumière est munie d'une couche de diffusion de lumière sur un côté ou sur deux côtés ou le matériau de la feuille de diffusion de lumière lui-même possède des propriétés de dispersion de la lumière.

6. Unité d'éclairage (1) selon les revendications 1 à 5, **caractérisée en ce que** la feuille de déviation de lumière (6) ferme le boîtier par une matière expansée (5) adhésive double face, appliquée sur le bord (1a) du boîtier (1).

7. Unité d'éclairage (1) selon la revendication 6, **caractérisée en ce que** deux ou plusieurs feuilles de déviation de lumière (6) sont couplées les unes aux autres par d'autres matières expansées adhésives doubles.

8. Unité d'éclairage (1) selon les revendications 1 à 7, **caractérisée en ce que** l'unité d'éclairage est installée comme un voyant dans un rétroviseur extérieur.

9. Unité d'éclairage (1) selon la revendication 8, **caractérisée en ce que** le voyant est attaché à la paroi intérieure, tournée vers le conducteur, d'un boîtier de rétroviseur extérieur.

10. Unité d'éclairage (1) selon les revendications 1 à 7, **caractérisée en ce que** l'unité d'éclairage est installée sous forme d'éclairage de proximité sur un véhicule.
